# EUROPEAN PATENT APPLICATION

(11) **EP 3 064 763 A1**
(43) Date of publication of application: **07.09.2016**
(21) Application number: 14872412.3
(22) Date of filing: 18.12.2014
(51) Int. Cl.: F02N 11/08, F02D 29/02, F02D 29/06, F02D 45/00, F02N 11/04

(54) **ENGINE UNIT AND VEHICLE**

(30) Priority: 20.12.2013 JP 2013263308; 20.12.2013 JP 2013263309
(71) Applicant: Yamaha Hatsudoki Kabushiki Kaisha, Iwata-shi, Shizuoka 438-8501 (JP)
(72) Inventor: NISHIKAWA, Takahiro, Iwata-shi Shizuoka 438-8501 (JP); HINO, Haruyoshi, Iwata-shi Shizuoka 438-8501 (JP)
(74) Representative: Zimmermann, Tankred Klaus
(86) International application number: PCT/JP2014/083594
(87) International publication number: WO 2015/093577

(57) **Abstract**

The present invention provides an engine unit, or the like, having a high-load region and a low-load region, and capable of lessening a variation in the position where rotation of a crankshaft stops after combustion of a four-stroke engine body is stopped. The engine unit includes: a four-stroke engine body having a high-load region and a low-load region; a three-phase brushless motor that starts the four-stroke engine body and generates power after starting the four-stroke engine body; an inverter including a plurality of switching parts; and a control device. The control device is configured to, while the crankshaft is in forward rotation after a combustion operation of the four-stroke engine body is stopped, control the plurality of switching parts so as to short-circuit terminals of a plurality of windings such that a resistance is applied to the forward rotation of the crankshaft, forcing the crankshaft to stop forwardly rotating in a compression stroke of the four-stroke engine body.

## Description

### Technical Field

The present invention relates to an engine unit including a four-stroke engine body in which a high-load region and a low-load region occur during four strokes, and also relates to a vehicle equipped with the engine unit.

### Background Art

Types of engines mounted to vehicles include a four-stroke engine (for example, a single-cylinder engine) having, during four strokes, a high-load region in which a high load is put on rotation of a crankshaft of the engine and a low-load region in which a low load is put on rotation of the crankshaft. Such a four-stroke engine requires that a starter motor generate a high output torque for enabling the crankshaft to rotate beyond the high-load region at a time of engine start.

The four-stroke engine exhibits a variation in the position where rotation of the crankshaft stops upon engine stop. That is, the position where rotation of the crankshaft stops varies each time the engine is stopped. Such a variation in the position where rotation of the crankshaft stops leads to, for example, a variation in the output torque required of the starter motor to rotate the crankshaft at a time of engine start (restart). Increasing the output torque of the starter motor is conceivable for handling such a variation, but it involves a size increase of the starter motor, which leads to a lessening in mountability of the engine unit to a vehicle.

Patent Literature 1 (PTL1) discloses an engine starter that starts an engine by driving a crankshaft once in reverse rotation, then stopping the crankshaft, and then driving the crankshaft in forward rotation.

The engine, which is started by the engine starter as shown in the Patent Literature 1, stops combustion if a combustion stop instruction is received during its operation. Rotation of the crankshaft subsequently stops. In the Patent Literature 1, in response to an engine start operation, the engine starter drives a starter motor so as to rotate the crankshaft of the engine in a reverse direction up to a preset position, and then stops the crankshaft.

The engine starter disclosed in the Patent Literature 1 aims to reduce the effect of a variation in the position where rotation of the crankshaft stops at a time of engine stop, by rotating the crankshaft in the reverse direction up to the preset position and then stopping the reverse rotation.

### Citation List

### Patent Literature

PTL1: Japanese Patent Application Laid-Open No. 2003-343404

### Summary of Invention

### Technical Problem

An object of the present invention is to provide: an engine unit including a four-stroke engine body in which a high-load region and a low-load region occur during four strokes, the engine unit capable of lessening a variation in the position where rotation of a crankshaft stops after combustion of the four-stroke engine body is stopped; and a vehicle equipped with the engine unit.

### Solution to Problem

To solve the problems described above, the present invention adopts the following configurations.
(1) An engine unit mountable to a vehicle, the engine unit including:
   a four-stroke engine body in which a high-load region and a low-load region occur during four strokes, the high-load region having a high load on rotation of a crankshaft, the low-load region having a lower load on rotation of the crankshaft than that of the high-load region;
   a three-phase brushless motor including a plurality of windings corresponding to three phases, the three-phase brushless motor drivable by a battery provided in the vehicle, the three-phase brushless motor being configured to start the four-stroke engine body by driving the crankshaft in forward rotation in response to reception of a start instruction, the three-phase brushless motor being configured to function as a generator that generates a current for charging the battery by being rotated along with rotation of the crankshaft after the four-stroke engine body is started;
   an inverter including a plurality of switching parts configured to control a current flowing between the battery and the three-phase brushless motor; and
   a control device including a starter motor controller and a combustion controller, the starter motor controller being configured to control the plurality of switching parts included in the inverter to control the current flowing between the battery and the three-phase brushless motor, the combustion controller being configured to control a combustion operation of the four-stroke engine body,
   the control device configured to, while the crankshaft is in forward rotation after the combustion operation of the four-stroke engine body is stopped, control the plurality of switching parts so as to short-circuit terminals of the plurality of windings such that a resistance is applied to the forward rotation of the crankshaft, forcing the crankshaft to stop forwardly rotating in a compression stroke of the four-stroke engine body.

In the engine unit of (1), the three-phase brushless motor drives the crankshaft in forward rotation to start the four-stroke engine body in response to reception of the start instruction, and generates a current for charging the battery by being rotated along with rotation of the crankshaft after the four-stroke engine body is started. While the crankshaft is in forward rotation after the combustion operation of the four-stroke engine body is stopped, the control device controls the plurality of switching parts so as to short-circuit the terminals of the plurality of windings, to apply a resistance to the forward rotation of the crankshaft. As a result, the rotation of the crankshaft decelerates in accordance with the applied resistance. Since the resistance applied by the short-circuiting of the windings is derived from an induced electromotive voltage of the windings, the resistance increases as the rotation speed of the crankshaft increases and decreases as the rotation speed of the crankshaft decreases. Therefore, when the rotation speed of the crankshaft is high, the resistance is high so that the rotation of the crankshaft decelerates rapidly. As the rotation speed of the crankshaft decreases, the resistance decreases. Meanwhile, the four-stroke engine body has the high-load region and the low-load region, and the crankshaft suffers a resistance against its rotation due to a reaction force of compression in the compression stroke. The resistance generated by the reaction force of compression increases as the crankshaft moving in forward rotation approaches the compression top dead center. The resistance generated by the reaction force of compression is lower as the rotation speed of the crankshaft is lower.

The engine unit of (1), which applies the resistance by short-circuiting the windings, is able to lower the rotation speed of the crankshaft to a degree that does not stop the rotation of the crankshaft, which can reduce any rebound of the crankshaft caused by the reaction force of compression and can prevent the crankshaft from overcoming the compression stroke. The engine unit of (1) is able to lessen a variation in the position where forward rotation of the crankshaft stops by taking advantage of characteristics of the resistance generated by short-circuiting of the terminals of the plurality of windings and characteristics of the resistance generated by the reaction force of compression.
(2) The engine unit according to (1), wherein
   the control device is configured to:
   after the combustion operation of the four-stroke engine body is stopped and before the compression stroke is reached, control the plurality of switching parts so as to start the short-circuiting of the terminals of the plurality of windings such that a resistance is applied to the forward rotation of the crankshaft, forcing the crankshaft to stop forwardly rotating in the compression stroke of the four-stroke engine body.

   In the configuration of (2), the short-circuiting of the terminals of the plurality of windings is started after the combustion operation of the four-stroke engine body is stopped and before the compression stroke is reached. After entry into the compression stroke, the resistance generated by the reaction force of compression is applied to the forward rotation. Accordingly, the configuration of (2) enables the resistance generated by the short-circuiting of the terminals of the plurality of windings to be more reliably applied for a long time within a period during which the resistance generated by the reaction force of compression is applied to the forward rotation in the compression stroke. As a result, a variation in the position where the forward rotation of the crankshaft stops can be further lessened.
(3) The engine unit according to (1) or (2), wherein
   the control device is configured to:
   after the forward rotation of the crankshaft stops in the compression stroke as a result of the resistance applied to the forward rotation of the crankshaft by the short-circuiting of the terminals of the plurality of windings, control the plurality of switching parts so as to drive the crankshaft in forward rotation, to start the four-stroke engine body.

   The configuration of (3) can take advantage of characteristics of the resistance generated by the short-circuiting of the terminals of the plurality of windings and characteristics of the resistance generated by the reaction force of compression, to achieve a less variation in the position where the forward rotation of the crankshaft stops after the combustion operation of the four-stroke engine body is stopped. Thus, in a configuration that drives the crankshaft in forward rotation in order to start the four-stroke engine body, the position where the crankshaft starts the forward rotation less largely varies. Accordingly, a variation in the torque required of the three-phase brushless motor to start the four-stroke engine body can be lessened.
(4) The engine unit according to (1) or (2), wherein
   the control device is configured to:
   after the forward rotation of the crankshaft stops in the compression stroke as a result of the resistance applied to the forward rotation of the crankshaft by the short-circuiting of the terminals of the plurality of windings, control the plurality of switching parts so as to drive the crankshaft in reverse rotation and then drive the crankshaft in forward rotation after the reverse rotation, to start the four-stroke engine body.

   The configuration of (4) can take advantage of characteristics of the resistance generated by the short-circuiting of the terminals of the plurality of windings and characteristics of the resistance generated by the reaction force of compression, to achieve a less variation in the position where the forward rotation of the crankshaft stops after the combustion operation of the four-stroke engine body is stopped. Thus, in a configuration that drives the crankshaft in reverse rotation and then drives the crankshaft in forward rotation in order to start the four-stroke engine body, the position where the crankshaft starts the reverse rotation less largely varies. As a consequence, a variation in the position where the crankshaft starts the forward rotation after the reverse rotation can be lessened. This leads to a less variation in the torque required of the three-phase brushless motor to start the four-stroke engine body. Accordingly, a reduced output torque of the three-phase brushless motor is permitted, and thus downsizing of the three-phase brushless motor is permitted.
(5) A vehicle including the engine unit according to any one of (1) to (4).

The vehicle of (5) is capable of lessening a variation in the position where forward rotation of the crankshaft of the engine unit stops.

### Advantageous Effects of Invention

The present invention can provide: an engine unit including a four-stroke engine body in which a high-load region and a low-load region occur during four strokes, the engine unit capable of lessening a variation in the position where rotation of a crankshaft stops after combustion of the four-stroke engine body is stopped; and a vehicle equipped with the engine unit.

### Brief Description of Drawings

[Fig. 1] Fig. 1 is cross-sectional view schematically showing an outline configuration of part of an engine unit according to a first embodiment of the present invention.
[Fig. 2] Fig. 2 is an illustrative diagram schematically showing the relationship between a crank angle position and a required torque at a time of engine start.
[Fig. 3] Fig. 3 is a cross-sectional view showing, on an enlarged scale, a three-phase brushless motor shown in Fig. 1 and there around.
[Fig. 4] Fig. 4 is a cross-sectional view showing a cross-section of the three-phase brushless motor shown in Fig. 3, as taken along a plane perpendicular to its rotation axis.
[Fig. 5] Fig. 5 is a block diagram showing a basic electrical configuration of the engine unit shown in Fig. 1.
[Fig. 6] Fig. 6 is a flowchart illustrating an operation of the engine unit shown in Fig. 1.
[Fig. 7] Fig. 7A illustrates a movement of a crankshaft of the engine unit shown in Fig. 1; and Fig. 7B schematically shows the relationship between an angle position of the crankshaft and a resistance to rotation.
[Fig. 8] Fig. 8 is a flowchart illustrating an operation of the engine unit EU according to a second embodiment.
[Fig. 9] Fig. 9 is a diagram showing an external appearance of a vehicle to which the engine unit is mounted.

### Description of Embodiments

A description will be given of studies carried out by the present inventors about enabling a crankshaft to stop forwardly rotating in a compression stroke of a four-stroke engine body having a high-load region and a low-load region.

In the four-stroke engine body having the high-load region and the low-load region, the crankshaft moving in forward rotation in the compression stroke which includes the high-load region suffers a resistance against its rotation generated by a reaction force of compression.

The resistance generated by the reaction force of compression, which means a load, depends on the position of the crankshaft in the compression stroke. The compression stroke includes a load peak of the high-load region. The load generated by the reaction force of compression has such characteristics that it increases as the crankshaft moving in forward rotation approaches the compression top dead center. The crankshaft makes the forward rotation so as to climb the load peak.

The resistance generated by the reaction force of compression, which means the load, is affected also by the rotation speed of the crankshaft. The resistance generated by the reaction force of compression is greater as the rotation speed of the crankshaft is higher. For example, the four-stroke engine body stops combustion if a combustion stop instruction is received during its operation. After the combustion is stopped, the crankshaft keeps rotating by inertia. If, for example, the motor puts no load or a small load on rotation of the crankshaft, the crankshaft rotates in the compression stroke at a high rotation speed. In this case, the crankshaft suffers a resistance generated by a strong reaction force of compression. When the crankshaft can no longer overcome the peak of the high load generated by the reaction force of compression, the crankshaft is rebounded into reverse rotation by the reaction force of compression, and then stops.

The position where the crankshaft stops after rebounded into reverse rotation by the reaction force of compression depends on a rebounding force exerted by the reaction force of compression. Accordingly, there is a large variation in the stop position.

A large variation in the stop position occurs not only when the motor puts no load or a small load on rotation but also when, for example, rotation of the crankshaft is assisted with driving of the motor after combustion of the four-stroke engine body is stopped.

On the other hand, for example, in a configuration that passes a current between the motor and a battery so that the three-phase brushless motor applies a strong resistance to rotation of the crankshaft, the position where the crankshaft stops tends to depend on the rotation speed of the crankshaft. For example, in a case where a strong resistance (braking force) applied by the three-phase brushless motor is maintained by the current flowing between the three-phase brushless motor and the battery; the crankshaft is likely to stop when an inertial force, which is according to the rotation speed of the crankshaft, falls below the resistance (braking force) applied by the three-phase brushless motor. It is therefore difficult to take advantage of the characteristics that the resistance increases as the crankshaft approaches the compression top dead center. For example, due to the braking force applied by the three-phase brushless motor, rotation of the crankshaft stops without sufficient exposure to the effect of the resistance generated by the reaction force of compression. In such a case, a large variation occurs in the position where the crankshaft stops.

To the contrary, the engine unit of the present invention controls a plurality of switching parts so as to short-circuit terminals of a plurality of windings, thus applying a resistance to forward rotation of the crankshaft. Deceleration of rotation of the crankshaft is according to the resistance. Since the resistance generated by the short-circuiting of the windings is derived from an induced electromotive voltage of the windings, the resistance increases as the rotation speed of the crankshaft increases and decreases as the rotation speed of the crankshaft decreases. Therefore, when the rotation speed of the crankshaft is high, the resistance is high so that the rotation of the crankshaft decelerates rapidly. As the rotation speed of the crankshaft decreases, the resistance to rotation decreases. This is why a variation in the rotation speed at a time when the resistance application is started is less influential if the resistance is generated by the short-circuiting of the winding terminals. In addition, the resistance generated by the short-circuiting of the winding terminals enables the crankshaft to keep rotating at a rotation speed that is low but does not stop the rotation for a longer time period than, for example, the resistance to rotation applied by passing a current between the battery and the windings.

In a case of enabling the crankshaft to stop forwardly rotating in the compression stroke by short-circuiting the terminals of the plurality of windings, the reaction force of compression is low because the rotation speed is low, which can reduce the rebound of the crankshaft caused by the reaction force of compression. Moreover, forcing the crankshaft to stop forwardly rotating in the compression stroke by short-circuiting the terminals of the plurality of windings involves an effective use of the characteristics that the resistance generated by the reaction force of compression depends on the position of the crankshaft in the compression stroke. When the rotation speed of the crankshaft is low, the resistance generated by the reaction force of compression is low. Nevertheless, the resistance generated by the reaction force of compression still has the characteristics that it increases as the crankshaft moving in forward rotation approaches the compression top dead center.

As the crankshaft decelerates in the compression stroke, the resistance generated by short-circuiting of the windings gradually decreases, and the reaction force of compression also decreases through the whole of the compression stroke. The resistance generated by the reaction force of compression, however, increases as the rotation of the crankshaft progresses in the compression stroke.

Accordingly, the rebound of the crankshaft caused by the reaction force of compression is reduced, and additionally the crankshaft is likely to stop in the middle of the peak of resistance generated by the reaction force of compression without overcoming the compression stroke. Using a combination of the characteristics of the resistance generated by short-circuiting of the terminals of the plurality of windings and the characteristics of the resistance generated by the reaction force of compression makes it easy to stop forward rotation of the crankshaft at a predetermined position or therearound. This is how a variation in the position where forward rotation of the crankshaft stops can be lessened. That is, a variation in the position where forward rotation stops is lessened as a result of a synergistic effect obtained from the characteristics of the resistance generated by short-circuiting of the terminals of the plurality of windings in combination with the characteristics of the resistance generated by the reaction force of compression.

Hereunder, the present invention will be described based on preferred embodiments with reference to the drawings.

### [Engine Unit]

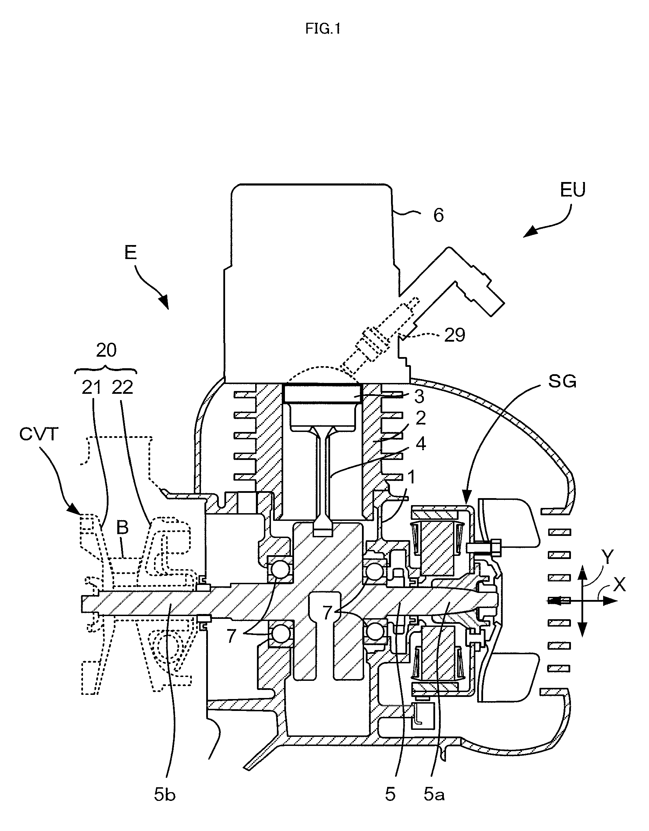

Fig. 1 is a cross-sectional view schematically showing an outline configuration of part of an engine unit EU according to a first embodiment of the present invention. The engine unit EU of this embodiment is a four-stroke engine unit for use in vehicle.

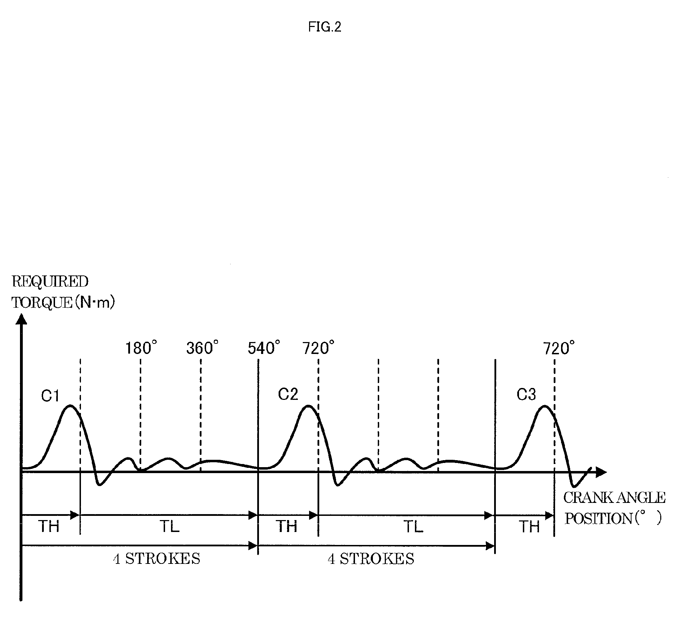

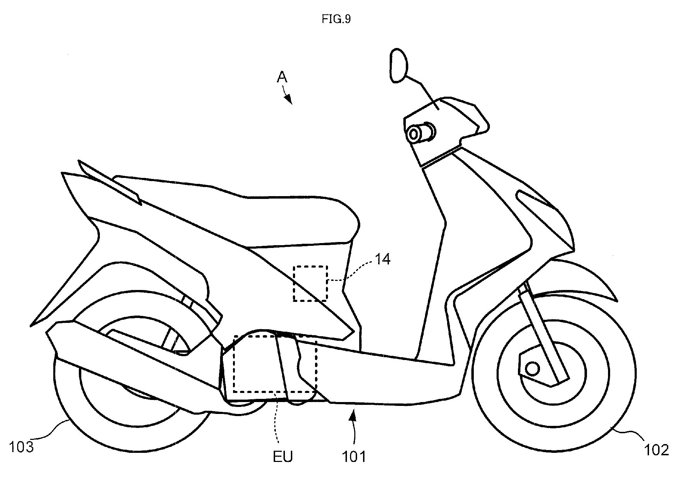

The engine unit EU is installed in a motorcycle (see Fig. 9) which is an example of the vehicle. The engine unit EU includes a four-stroke engine body E and a three-phase brushless motor SG. The four-stroke engine body E is a four-stroke engine having a single cylinder. In the four-stroke engine body E, the relationship shown in Fig. 2 is established between a crank angle position and a required torque.

Fig. 2 is an illustrative diagram schematically showing the relationship between a crank angle position and a required torque at a time of engine start.

The four-stroke engine body E has, during four strokes, a high-load region TH in which a high load is put on rotation of a crankshaft 5 and a low-load region TL in which a load put on rotation of the crankshaft 5 is lower than that of the high-load region TH. From the viewpoint of the rotation angle of the crankshaft 5, the low-load region TL is equal to or wider than the high-load region TH. To be specific, the low-load region TL is wider than the high-load region TH. In other words, a rotation angle region corresponding to the low-load region TL is wider than a rotation angle region corresponding to the high-load region TH. In more detail, during rotation, the four-stroke engine body E repeats four strokes, namely, an intake stroke, a compression stroke, an expansion stroke, and an exhaust stroke. The compression stroke is included in the high-load region TH, and not included in the low-load region TL. In the four-stroke engine body E of this embodiment, the high-load region TH is a region that substantially overlaps the compression stroke, and the low-load region TL is a region that substantially overlaps the intake stroke, the expansion stroke, and the exhaust stroke. It is not necessary that the boundary of the high-load region TH and the boundary of the low-load region TL are coincident with the boundaries of the corresponding strokes.

One cycle of the four-stroke engine body E includes one intake stroke, one compression stroke, one expansion stroke, and one exhaust stroke.

As shown in Fig. 1, the engine unit EU includes the three-phase brushless motor SG. The three-phase brushless motor SG is a starter motor. More specifically, the three-phase brushless motor SG is a starter generator. At a time of engine start, the three-phase brushless motor SG drives the crankshaft 5 in forward rotation to start the four-stroke engine body E. During at least part of a time period following the start of the four-stroke engine body E, the three-phase brushless motor SG is driven in forward rotation by the crankshaft 5 to function as a generator. At this time, the three-phase brushless motor SG generates power by being rotated along with rotation of the crankshaft 5. Although the three-phase brushless motor SG functions as a generator, it is not indispensable that the three-phase brushless motor SG functions as a generator all the time after combustion of the engine is started. In an acceptable example, the three-phase brushless motor SG does not function as a generator immediately after combustion of the engine is started, and the three-phase brushless motor SG functions as a generator upon satisfaction of a predetermined condition. Examples of the predetermined condition include a condition that the rotation speed of the engine reaches a predetermined speed or a condition that a predetermined time period elapses after combustion of the engine is started. It may be acceptable that a period in which the three-phase brushless motor SG functions as a generator and a period in which the three-phase brushless motor SG functions as a motor (for example, as a vehicle-driving motor) are present after combustion of the engine is started.

The three-phase brushless motor SG also serves to apply a resistance to rotation of the rotating crankshaft 5 in response to a control when the crankshaft 5 rotates. The three-phase brushless motor SG decelerates rotation of the crankshaft 5 by applying the resistance to the rotation of the crankshaft 5.

The three-phase brushless motor SG is attached to the crankshaft 5 of the four-stroke engine body E. In this embodiment, the three-phase brushless motor SG is attached to the crankshaft 5 without interposition of a power transmission mechanism (such as a belt, a chain, a gear, a speed reducer, or a speed increaser). In the present invention, however, it suffices that the three-phase brushless motor SG is configured such that the crankshaft 5 is driven in forward rotation by forward rotation of the three-phase brushless motor SG. Therefore, the three-phase brushless motor SG may be attached to the crankshaft 5 with interposition of a power transmission mechanism. In the present invention, it is preferable that the rotation axis of the three-phase brushless motor SG is substantially coincident with the rotation axis of the crankshaft 5. It is also preferable that the three-phase brushless motor SG is attached to the crankshaft 5 without interposition of a power transmission mechanism, as illustrated in this embodiment.

The four-stroke engine body E includes a crank case 1 (engine case 1), a cylinder 2, a piston 3, a connecting rod 4, and a crankshaft 5. The cylinder 2 is arranged to protrude from the crank case 1 in a predetermined direction (for example, obliquely upward). The piston 3 is arranged in the cylinder 2 such that the piston 3 is freely movable to and fro. The crankshaft 5 is rotatably arranged in the crank case 1. One end portion (for example, an upper end portion) of the connecting rod 4 is coupled to the piston 3. The other end portion (for example, a lower end portion) of the connecting rod 4 is coupled to the crankshaft 5. A cylinder head 6 is attached to an end portion (for example, an upper end portion) of the cylinder 2. The crankshaft 5 is supported on the crank case 1 via a pair of bearings 7 in a freely rotatable manner. One end portion 5a (for example, a right end portion) of the crankshaft 5 protrudes out of the crank case 1. The three-phase brushless motor SG is attached to the one end portion 5a of the crankshaft 5.

The other end portion 5b (for example, a left end portion) of the crankshaft 5 protrudes out of the crank case 1. A primary pulley 20 of a continuously variable transmission CVT is attached to the other end portion 5b of the crankshaft 5. The primary pulley 20 includes a fixed sheave 21 and a movable sheave 22. The fixed sheave 21 is fixed to a distal end portion of the other end portion 5b of the crankshaft 5 in such a manner that the fixed sheave 21 rotates together with the crankshaft 5. The movable sheave 22 is splined to the other end portion 5b of the crankshaft 5. Thus, the movable sheave 22 is movable in an axial direction X. The movable sheave 22 is configured to rotate together with the crankshaft 5 with the interval between the movable sheave 22 and the fixed sheave 21 varying. A belt B is wrapped on the primary pulley 20 and a secondary pulley (not shown). A rotation force of the crankshaft 5 is transmitted to a drive wheel of a motorcycle (see Fig. 9).

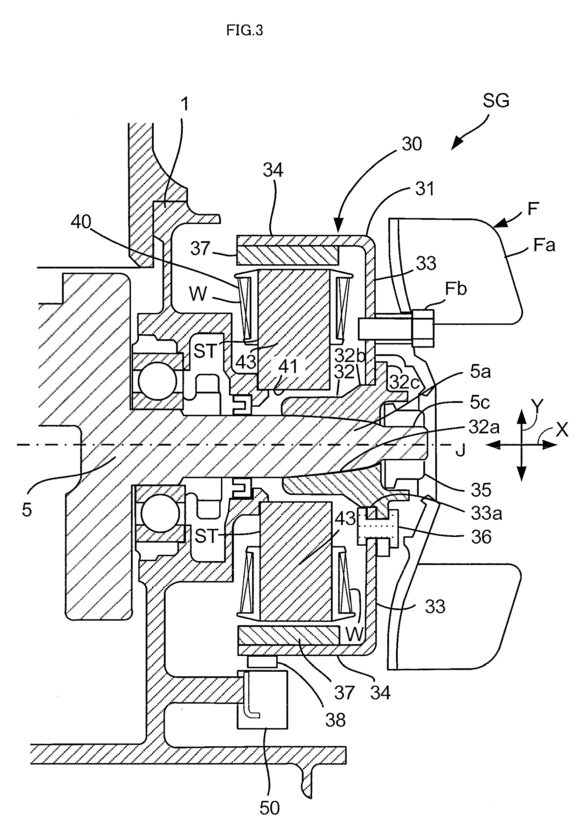

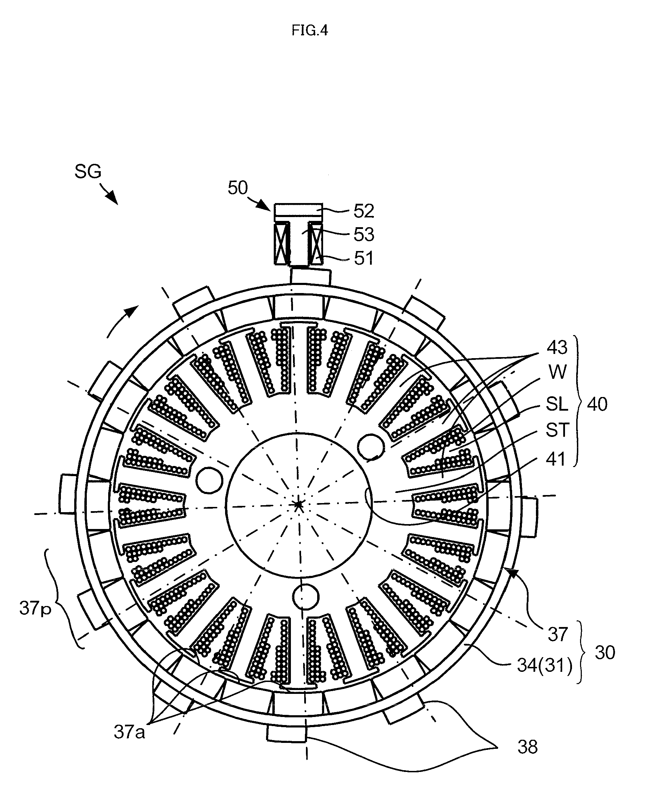

Fig. 3 is a cross-sectional view showing, on an enlarged scale, the three-phase brushless motor SG shown in Fig. 1 and therearound. Fig. 4 is a cross-sectional view showing a cross-section of the three-phase brushless motor SG, as taken along a plane perpendicular to its rotation axis J shown in Fig. 3.

The three-phase brushless motor SG includes an outer rotor 30 and an inner stator 40. The outer rotor 30 includes an outer rotor main body part 31. The outer rotor main body part 31 is made of, for example, a ferromagnetic material. The outer rotor main body part 31 is in the shape of a cylinder with a bottom. The outer rotor main body part 31 includes a cylindrical boss portion 32, a disk-shaped bottom wall portion 33, and a back yoke portion 34 having a cylindrical shape. The cylindrical boss portion 32 is fixed to the crankshaft 5 under a state where the one end portion 5a of the crankshaft 5 is received in the cylindrical boss portion 32. The bottom wall portion 33, which is fixed to the cylindrical boss portion 32, has a disk-like shape that extends in a radial direction Y of the crankshaft 5. The back yoke portion 34 has a cylindrical shape that extends from an outer circumferential edge of the bottom wall portion 33 in the axial direction X of the crankshaft 5. The back yoke portion 34 extends toward the crank case 1.

The bottom wall portion 33 and the back yoke portion 34 are integrally formed of, for example, a metal plate being stamped. In the present invention, however, it is acceptable that the bottom wall portion 33 and the back yoke portion 34 are formed as separate parts. More specifically, in the outer rotor main body part 31, the back yoke portion 34 may be formed integrally with another part of the outer rotor main body part 31, or may be formed as a part separate from another part of the outer rotor main body part 31. In a case where the back yoke portion 34 and another part are formed as separate parts, an essential feature is that the back yoke portion 34 is made of a ferromagnetic material, and another part may be made of a material different from the ferromagnetic material.

The cylindrical boss portion 32 has a tapered reception hole 32a for receiving the one end portion 5a of the crankshaft 5. The tapered reception hole 32a extends in the axial direction X of the crankshaft 5. The tapered reception hole 32a has a taper angle that corresponds to an outer circumferential surface of the one end portion 5a of the crankshaft 5. When the one end portion 5a of the crankshaft 5 enters the reception hole 32a, the outer circumferential surface of the one end portion 5a comes into contact with an inner circumferential surface of the reception hole 32a, and the crankshaft 5 is secured to the reception hole 32a. As a result, the position of the boss portion 32 is settled with respect to the axial direction X of the crankshaft 5. In this condition, a nut 35 is screwed onto a male thread portion 5c formed in a distal end portion of the one end portion 5a of the crankshaft 5. In this manner, the cylindrical boss portion 32 is fixed to the crankshaft 5.

The cylindrical boss portion 32 has a large-diameter portion 32b that is provided in a proximal end portion (in Fig. 3, at the right side) of the cylindrical boss portion 32. The cylindrical boss portion 32 has a flange portion 32c that is formed on an outer circumferential surface of the large-diameter portion 32b. The flange portion 32c extends radially outward. The large-diameter portion 32b of the cylindrical boss portion 32 is received in a hole 33a that is formed in a central region of the bottom wall portion 33 of the outer rotor main body part 31. In this condition, the flange portion 32c is in contact with an outer peripheral surface (a right-hand surface in Fig. 3) of the bottom wall portion 33. The flange portion 32c of the cylindrical boss portion 32 and the bottom wall portion 33 of the outer rotor main body part 31 are fixed together by rivets 36 at a plurality of locations with respect to a circumferential direction of the outer rotor main body part 31. The rivets 36 penetrate through the flange portion 32c and the bottom wall portion 33.

The three-phase brushless motor SG is a permanent-magnet motor. The back yoke portion 34 of the outer rotor main body part 31 has a plurality of permanent magnet parts 37 that are provided on an inner circumferential surface of the back yoke portion 34. Each of the permanent magnet parts 37 is provided such that S pole and N pole are aligned with respect to a radial direction of the three-phase brushless motor SG.

The plurality of permanent magnet parts 37 are arranged in such a manner that N pole and S pole alternately appear with respect to a circumferential direction of the three-phase brushless motor SG. In this embodiment, the number of magnetic poles of the outer rotor 30 opposed to the inner stator 40 is twenty-four. The number of magnetic poles of the outer rotor 30 means the number of magnetic poles opposed to the inner stator 40. The number of magnetic pole faces of the permanent magnet parts 37 that are opposed to teeth 43 of a stator core ST is equivalent to the number of magnetic poles of the outer rotor 30. A magnetic pole face included in each magnetic pole of the outer rotor 30 corresponds to a magnetic pole face of the permanent magnet part 37 that is opposed to the inner stator 40. The magnetic pole face of the permanent magnet part 37 is covered with a non-magnetic material (not shown) that is arranged between the permanent magnet part 37 and the inner stator 40. No magnetic material is arranged between the permanent magnet part 37 and the inner stator 40. No particular limitation is put on the non-magnetic material, and examples thereof include a stainless steel material. In this embodiment, the permanent magnet part 37 is a ferrite magnet. In the present invention, conventionally known magnets including a neodymium bonded magnet, a samarium-cobalt magnet, a neodymium magnet, and the like, are adoptable as a permanent magnet. The shape of the permanent magnet part 37 is not particularly limited. It may be acceptable that the outer rotor 30 is of interior permanent magnet type (IPM type) having the permanent magnet parts 37 embedded in a magnetic material, but preferably the outer rotor 30 is of surface permanent magnet type (SPM type) having the permanent magnet parts 37 exposed from a magnetic material, as illustrated in this embodiment.

As described above, the outer rotor 30, which is attached to the crankshaft 5 such that it is rotatable together with the crankshaft 5, is a rotating element for increasing the inertia of the crankshaft 5. A cooling fan F including a plurality of blade portions Fa is provided to the outer peripheral surface (at the right side in Figs. 1 and 3) of the bottom wall portion 33 of the outer rotor 30. The cooling fan F is fixed to the outer peripheral surface of the bottom wall portion 33 by means of a fixture (a plurality of bolts Fb).

The inner stator 40 includes a stator core ST and multi-phase stator windings W. The stator core ST is obtained by, for example, thin silicon steel plates being stacked in the axial direction. The stator core ST has, in its central region, a hole 41 whose inner diameter is larger than the outer diameter of the cylindrical boss portion 32 of the outer rotor 30. The stator core ST includes a plurality of teeth 43 that integrally extend radially outward (see Fig. 4). In this embodiment, eighteen teeth 43 in total are arranged at intervals with respect to the circumferential direction. In other words, the stator core ST has eighteen slots SL in total that are arranged at intervals with respect to the circumferential direction (see Fig. 4). The teeth 43 are arranged at substantially equal intervals with respect to the circumferential direction.

The three-phase brushless motor SG is a three-phase motor. The three-phase brushless motor SG has a plurality of stator windings W corresponding to the three phases. Each of the stator windings W is wound on each of the teeth 43. The multi-phase stator windings W are arranged through the slots SL. Each of the multi-phase stator windings W belongs to any of U-phase, V-phase, and W-phase. The stator windings W are arranged in the order of U-phase, V-phase, and W-phase, for example. The stator winding W corresponds to an example of the winding of the present invention.

As shown in Fig. 3, the inner stator 40 has the hole 41 formed in a central region of the inner stator 40 with respect to the radial direction of the three-phase brushless motor SG. The crankshaft 5 and the cylindrical boss portion 32 of the outer rotor 30 are arranged in the hole 41 with a gap ensured between them and a wall surface (of the inner stator 40) defining the hole 41. The inner stator 40 under this condition is attached to the crank case 1 of the four-stroke engine body E. The teeth 43 of the inner stator 40 are arranged such that end portions (distal surfaces) of the teeth 43 are at an interval from the magnetic pole faces (inner circumferential surfaces) of the permanent magnet parts 37 of the outer rotor 30. In this state, the outer rotor 30 is rotated along with rotation of the crankshaft 5. The outer rotor 30 rotates together with the crankshaft 5. Therefore, the rotation speed of the outer rotor 30 is equal to the rotation speed of the crankshaft 5.

A further description of the outer rotor 30 will be given with reference to Fig. 4. The permanent magnet parts 37 are provided outside the inner stator 40 with respect to the radial direction of the three-phase brushless motor SG. The back yoke portion 34 is provided outside the permanent magnet parts 37 with respect to the radial direction. The permanent magnet parts 37 include, in their surfaces opposed to the inner stator 40, a plurality of magnetic pole faces 37a. The magnetic pole faces 37a are arranged side by side with respect to the circumferential direction of the three-phase brushless motor SG. Each of the magnetic pole faces 37a has N pole or S pole. The N pole and S pole are arranged alternately with respect to the circumferential direction of the three-phase brushless motor SG. The magnetic pole faces 37a of the permanent magnet parts 37 face the inner stator 40. In this embodiment, a plurality of magnets are arranged in the circumferential direction of the three-phase brushless motor SG, and each of the plurality of magnets is arranged with its S pole and N pole lining up along the radial direction of the three-phase brushless motor SG. A single S pole and a single N pole adjacent to each other with respect to the circumferential direction constitute a magnetic pole face pair 37p. The number of the magnetic pole face pairs 37p is one-half of the number of the magnetic pole faces 37a. In this embodiment, the outer rotor 30 is provided with twenty-four magnetic pole faces 37a that are opposed to the inner stator 40, and the number of the magnetic pole face pairs 37p included in the outer rotor 30 is twelve. In Fig. 4, twelve magnetic pole face pairs 37p corresponding to twelve magnet pairs are shown. For clarity of the drawing, the reference sign 37p is given to only one of the pairs. The number of the magnetic pole faces 37a included in the three-phase brushless motor SG is more than 2/3 of the number of the teeth 43. The number of the magnetic pole faces 37a included in the three-phase brushless motor SG is equal or more than 4/3 of the number of the teeth 43.

The outer rotor 30 includes, on its outer surface, a plurality of detection object parts 38 for detection of the rotation position of the outer rotor 30. Magnetic effects are used to detect the plurality of detection object parts 38. The plurality of detection object parts 38 arranged at intervals with respect to the circumferential direction are provided on the outer surface of the outer rotor 30. In this embodiment, the plurality of detection object parts 38 arranged at intervals with respect to the circumferential direction are provided on an outer circumferential surface of the outer rotor 30. The plurality of detection object parts 38 are arranged on an outer circumferential surface of the back yoke portion 34 having a cylindrical shape. Each of the plurality of detection object parts 38 protrudes from the outer circumferential surface of the back yoke portion 34 toward the outside with respect to the radial direction Y of the three-phase brushless motor SG. The bottom wall portion 33, the back yoke portion 34, and the detection object parts 38 are integrally formed of, for example, a metal plate such as an iron plate being stamped. That is, the detection object parts 38 are made of a ferromagnetic material. Details of arrangement of the detection object parts 38 will be described later.

A rotor position detection device 50 is a device that detects the position of the outer rotor 30. The rotor position detection device 50 is provided at a position allowed to be opposed to the plurality of detection object parts 38. To be more specific, the rotor position detection device 50 is arranged at a position that allows the plurality of detection object parts 38 to come into opposition to the rotor position detection device 50 one after another. The rotor position detection device 50 is opposed to a path through which the detection object parts 38 move along with rotation of the outer rotor 30. The rotor position detection device 50 is arranged at a position distant from the inner stator 40. In this embodiment, the rotor position detection device 50 is arranged such that the back yoke portion 34 and the permanent magnet parts 37 of the outer rotor 30 are located between the rotor position detection device 50 and the inner stator 40 having the stator windings W with respect to the radial direction of the crankshaft 5. The rotor position detection device 50 is arranged outside the outer rotor 30 with respect to the radial direction of the three-phase brushless motor SG. The rotor position detection device 50 faces the outer circumferential surface of the outer rotor 30.

The rotor position detection device 50 includes a detection-purpose winding 51, a detection-purpose magnet 52, and a core 53. The detection-purpose winding 51 functions as a pick-up coil for detecting the detection object parts 38. The core 53 is a rod-like member made of, for example, iron. The detection-purpose winding 51 magnetically detects the detection object parts 38. Upon start of rotation of the crankshaft 5, the rotor position detection device 50 starts detection of the rotation position of the outer rotor 30. Instead of the above-described configuration in which a voltage caused by an electromotive force varies along with passing of the detection object parts 38, other configurations are also adoptable for the rotor position detection device 50. Examples of such other configurations adoptable for the rotor position detection device 50 include a configuration in which the detection-purpose winding 51 is constantly rendered conducting and a conducting current varies depending on a variation in inductance caused along with passing of the detection object parts 38. No particular limitation is put on the rotor position detection device 50, and it may include a Hall element or an MR element. The engine unit EU of this embodiment (see Fig. 1) may include a Hall element or an MR element.

Referring to Fig. 4, a description will be given of arrangement of the detection object parts 38 of the outer rotor 30. In this embodiment, the plurality of detection object parts 38 are provided on the outer surface of the outer rotor 30. The plurality of detection object parts 38 have the same positional relationship relative to the corresponding magnetic pole face pairs 37p. The rotor position detection device 50 is provided at a position allowed to be opposed to the plurality of detection object parts 38. The rotor position detection device 50 is provided at a position allowed to be opposed to each of the plurality of detection object parts 38 during rotation of the outer rotor 30. The number of the detection object parts 38 to which the rotor position detection device 50 is simultaneously (at one time) opposed is one, and not more than one. In Fig. 4, the dashed and dotted lines indicate specified positions with respect to the circumferential direction, which are defined in advance. Each of the specified positions is a position in the magnetic pole pair 37p including two magnetic poles (S pole and N pole) adjacent to each other with respect to the circumferential direction. In this embodiment, the outer rotor 30 is provided with eleven detection object parts 38, the number of which is one less than the number of the specified positions. The eleven detection object parts 38 are arranged at eleven of the twelve specified positions, respectively.

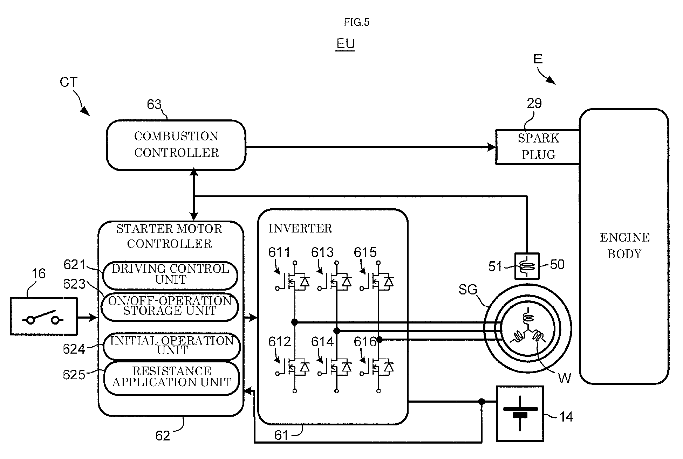

Fig. 5 is a block diagram showing a basic electrical configuration of the engine unit EU shown in Fig. 1.

The engine unit EU includes the four-stroke engine body E, the three-phase brushless motor SG, and a control device CT. The three-phase brushless motor SG, a spark plug 29, and a battery 14 are connected to the control device CT.

The control device CT is connected to the multi-phase stator windings W, and supplies a current from the battery 14 provided in a vehicle to the multi-phase stator windings W. The control device CT includes a starter motor controller 62, a combustion controller 63, and a plurality of switching parts 611 to 616. In this embodiment, the control device CT includes six switching parts 611 to 616. The switching parts 611 to 616 constitute an inverter 61. The inverter 61 is a three-phase bridge inverter. The switching parts 611 to 616 of the inverter 61 are provided between the battery 14 and the three-phase brushless motor SG. The switching parts 611 to 616 control a voltage applied from the battery 14 to the three-phase brushless motor SG. The plurality of switching parts 611 to 616, each of which is connected to each phase of the multi-phase stator windings W, selectively apply or do not apply the voltage between the multi-phase stator windings W and the battery 14. In this manner, the plurality of switching parts 611 to 616 selectively allow or block the passing of a current between the multi-phase stator windings W and the battery 14. That is, the plurality of switching parts 611 to 616 control a current flow between the battery 14 and the three-phase brushless motor SG. More specifically, when the three-phase brushless motor SG functions as a starter motor, switching between causing conduction of the multi-phase stator windings W and stopping the conduction is implemented by on/off-operation of the switching parts 611 to 616. When the three-phase brushless motor SG functions as a generator, switching between allowing and blocking the passing of a current between each of the stator windings W and the battery 14 is implemented by on/off-operation of each of the switching parts 611 to 616. By switching on/off the switching parts 611 to 616 one after another, a control of a voltage and a rectification of a three-phase AC outputted from the three-phase brushless motor SG are performed.

Each of the switching parts 611 to 616 includes a switching element. The switching element is, for example, a transistor and in more detail, a FET (Field Effect Transistor). Instead of FETs, for example, thyristors or IGBTs (Insulated Gate Bipolar Transistors) are also adoptable for the switching parts 611 to 616.

The starter motor controller 62 controls the plurality of switching parts 611 to 616. The starter motor controller 62 controls a voltage applied from the battery 14 to the three-phase brushless motor SG by controlling each of the six switching parts 611 to 616 corresponding to the three phases. The starter motor controller 62 controls the operation of the three-phase brushless motor SG by controlling on/off-operation of each of the switching parts 611 to 616. The starter motor controller 62 is able to drive the three-phase brushless motor SG in either forward or reverse rotation by controlling on/off-operation of each of the switching parts 611 to 616. The starter motor controller 62 includes a driving control unit 621, an on/off-operation storage unit 623, an initial operation unit 624, and a resistance application unit 625.

The combustion controller 63 and the starter motor controller 62 including the driving control unit 621 and the resistance application unit 625 are implemented by a computer (not shown) and control software executable by the computer. Here, it is also acceptable that the combustion controller 63 and the starter motor controller 62 are partially or entirely implemented by a wired logic which is an electronic circuit. For example, the starter motor controller 62 and the combustion controller 63 may be configured as separate devices arranged at a distance from each other, or alternatively they may be configured as an integrated device.

The driving control unit 621 of the starter motor controller 62 directs the three-phase brushless motor SG to rotate the crankshaft 5. The driving control unit 621 controls the plurality of switching parts 611 to 616 included in the inverter 61, to control a current flowing between the battery 14 and the three-phase brushless motor SG. In this manner, the driving control unit 621 drives the three-phase brushless motor SG.

The on/off-operation storage unit 623 is formed of a memory, for example. The on/off-operation storage unit 623 stores data relating to on/off-operation of the plurality of switching parts 611 to 616. More specifically, the on/off-operation storage unit 623 stores a map of information used for the control device CT to control the three-phase brushless motor SG and the four-stroke engine body E, and software describing the information. The initial operation unit 624 is formed of an electronic circuit. The initial operation unit 624 generates an electrical signal for performing on/off-operation of the plurality of switching parts 611 to 616 when the crankshaft 5 is in a stopped state. The control device CT may concurrently operate both the on/off-operation storage unit 623 and the initial operation unit 624, or may operate one of the on/off-operation storage unit 623 and the initial operation unit 624.

After combustion of the four-stroke engine body E is stopped, the resistance application unit 625 controls the three-phase brushless motor SG to control the rotation of the crankshaft 5 such that the rotation of the crankshaft 5 stops.

The combustion controller 63 causes the spark plug 29 to perform an ignition operation, thus controlling a combustion operation of the four-stroke engine body E. In a case where the four-stroke engine body E includes a fuel injector that injects a fuel for generation of a mixed gas, the combustion controller 63 also controls injection of the fuel injector, to control the combustion operation of the four-stroke engine body E.

A starter switch 16 for starting the four-stroke engine body E is connected to the starter motor controller 62. The starter switch 16 is operated by a rider to start the four-stroke engine body E. The starter motor controller 62 of the control device CT detects a voltage of the battery 14, and thus detects the state of charge of the battery 14. For the detection of the state of charge of the battery 14, not only detection of the voltage of the battery 14 but also, for example, detection of a current flowing in the battery 14 in a charged state is adoptable.

The control device CT directs the starter motor controller 62 to control the inverter 61. The control device CT controls the three-phase brushless motor SG via operations of the inverter 61. In this embodiment, a capacitor (not shown) is provided between the inverter 61 and the battery 14, and the battery 14 and the capacitor constitute an electricity storage unit.

### [Operations of Engine Unit]

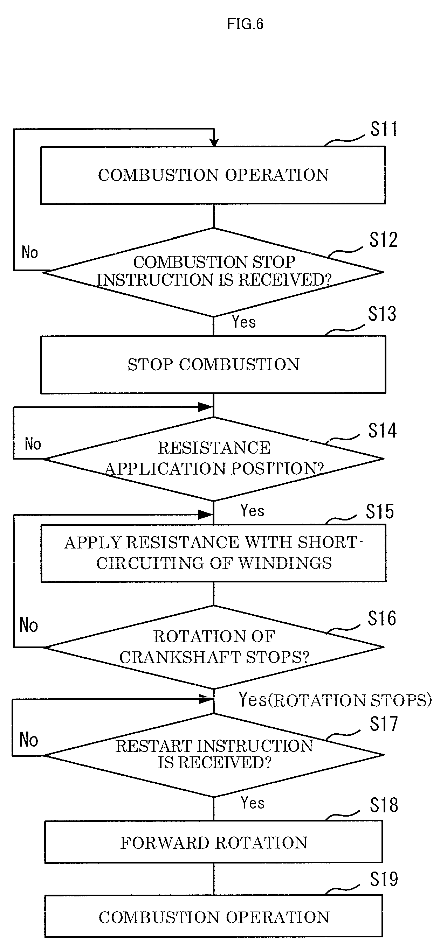

Fig. 6 is a flowchart illustrating an operation of the engine unit EU shown in Fig. 1.

A stop operation for stopping the engine unit EU, which is illustrated herein, begins when the engine unit EU is in a combustion operation (step S11).

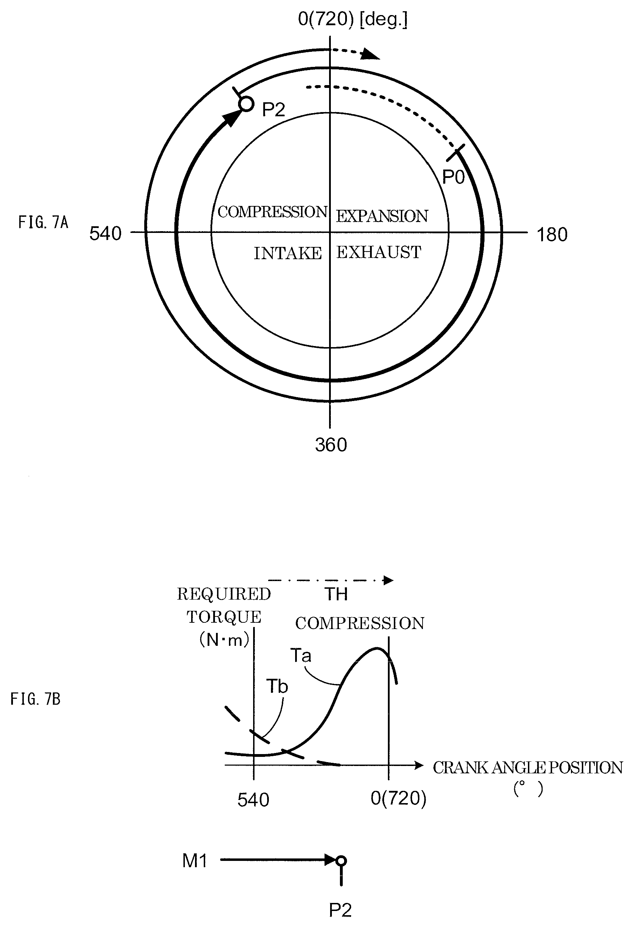

Fig. 7A illustrates a movement of the crankshaft 5 of the engine unit EU shown in Fig. 1. Fig. 7B schematically shows the relationship between an angle position of the crankshaft 5 and a resistance to rotation.

With reference to Figs. 6 and 7, the operation of the engine unit EU will be described step by step.

The combustion operation state is, for example, an idling state. The idling state means the state where the vehicle is stopped with its engine rotating. In the idling state, the engine is free of load and running at a minimum rotation speed. The combustion state will be described below, taking the idling state as an example.

As for a type of vehicle whose engine stops when the vehicle is stopped, it is usual the case that, after a predetermined time period has elapsed since the vehicle was actually stopped, it is determined that the vehicle is stopped, so that the engine is stopped. In this case, the vehicle is stopped with its engine rotating, that is, the vehicle is in the idling state, during a time period from when the vehicle was stopped to when it is determined that the vehicle is stopped.

Under the state where engine unit EU is in the idling state, that is, in the combustion operation (step S11), if no combustion stop instruction is received (step S12: NO), the control device CT continues the combustion operation. If a combustion stop instruction is received (step S12: YES), the control device CT stops the combustion of the engine (step S13). To be exact, the combustion controller 63 stops the combustion of the engine. The combustion stop instruction may be an internal instruction generated in response to the control device CT determining that the vehicle has stopped. Alternatively, the combustion stop instruction may be an external instruction inputted by the rider. After the combustion of the engine is stopped, the crankshaft 5 keeps rotating for a while by inertia. The rotation of the crankshaft 5 is detected by the rotor position detection device 50.

After the combustion operation of the four-stroke engine body E is stopped (after step S13), the control device CT directs the three-phase brushless motor SG to apply a resistance to the forward rotation of the crankshaft 5, forcing the crankshaft 5 to stop in the compression stroke of the four-stroke engine body E (steps S14 to S19). To be precise, the resistance application unit 625 of the starter motor controller 62 directs the three-phase brushless motor SG to apply a resistance to the forward rotation of the crankshaft 5, forcing the crankshaft 5 to stop in the compression stroke of the four-stroke engine body E.

To be more precise, after the combustion operation of the four-stroke engine body E is stopped, the control device CT directs the three-phase brushless motor SG to apply a resistance to the forward rotation of the crankshaft 5 based on the position of the crankshaft 5. The control device CT starts to apply a resistance to the forward rotation based on the position of the crankshaft 5. After the combustion operation of the four-stroke engine body E is stopped and before the crankshaft 5 reaches the compression stroke (step S14: YES), the control device CT starts to apply a resistance to the forward rotation (step S15).

The control device CT detects the position of the crankshaft 5 based on a signal supplied from the rotor position detection device 50. Here, it is acceptable that the control device CT detects the position of the crankshaft 5 based on a signal supplied from a device or sensor different from the rotor position detection device 50, for example. It is also acceptable that the control device CT detects the rotation speed of the crankshaft 5.

In this embodiment, the control device CT starts to apply a resistance to the forward rotation of the crankshaft 5 after the crankshaft 5 passes through the compression top dead center and before the crankshaft 5 reaches the compression stroke.

In an example shown in Fig. 7, in response to the crankshaft 5 having passed through a predetermined position P0 after the combustion operation of the four-stroke engine body E was stopped, a resistance is applied to the forward rotation of the crankshaft 5, so that the crankshaft 5 stops at a position P2 in the compression stroke. In this example, the position P0 is located in the expansion stroke.

In step S15 mentioned above, the control device CT directs the switching parts 611 to 616 to short-circuit terminals of the three-phase stator windings W. In one example, the control device CT brings the negative-side switching parts 612, 614, 616 into on-state concurrently. This results in short-circuiting of the terminals of the stator windings W. In this embodiment, all the terminals of the stator windings W are short-circuited. That is, the terminals of the stator windings W corresponding to all of the three phases of the three-phase brushless motor SG are short-circuited.

A period from when combustion of the engine is stopped (step S13) to when the short-circuiting of the terminals of the stator windings W is started is a period during which the three-phase brushless motor SG is not directed to apply any resistance to the forward rotation.

If the short-circuiting of the terminals of the stator windings W occurs, a current flows in the stator windings W due to the induced electromotive voltage of the stator windings W. The current flowing in the stator windings W causes a resistance to rotation to be generated in the three-phase brushless motor SG. The three-phase brushless motor SG applies the resistance to rotation of the crankshaft 5.

Since the resistance generated by the short-circuiting of the terminals of the stator windings W is derived from the induced electromotive voltage of the stator windings W, the resistance increases as the rotation speed of the crankshaft 5 increases and decreases as the rotation speed of the crankshaft 5 decreases. Therefore, when the rotation speed of the crankshaft 5 is high, the resistance is high so that the rotation of the crankshaft 5 rapidly decelerates. The higher the rotation speed of the crankshaft 5 is, the better the braking produced by the short-circuiting of the terminals of the stator windings W works. As the rotation speed of the crankshaft 5 decreases, the resistance decreases. That is, when the rotation speed of the crankshaft 5 is lower, the braking produced by the short-circuiting of the terminals of the stator windings W is less effective.

Forcing the crankshaft 5 to stop forwardly rotating in the compression stroke by short-circuiting the terminals of the plurality of stator windings W involves an effective use of the resistance generated by the reaction force of compression in the compression stroke.

Fig. 7B shows a resistance to rotation in a case where forward rotation of the crankshaft 5 stops at the position P2 in the compression stroke. Fig. 7B schematically shows a resistance Ta to rotation generated by the reaction force of gas compression and a resistance Tb to rotation generated by the short-circuiting of the terminals of the stator windings W. In Fig. 7B, the required torque corresponds to a resistance to rotation.

Since the resistance generated by the short-circuiting of the stator windings W is derived from the induced electromotive voltage of the stator windings W, the resistance decreases as the rotation speed of the crankshaft 5 decreases. When the rotation speed is low, the resistance generated by the short-circuiting of the terminals of the stator windings W is low, which makes it likely that the crankshaft 5 rotates at a rotation speed that is low but does not stop the rotation.

Meanwhile, the crankshaft 5 suffers a resistance against its rotation generated by the reaction force of gas compression in the compression stroke. The resistance generated by the reaction force of compression depends on the position of the crankshaft 5 in the compression stroke. The resistance Ta generated by the reaction force of compression increases as the crankshaft moving in forward rotation approaches the compression top dead center. As shown in Fig. 7B, the resistance Ta generated by the reaction force of compression exhibits curved characteristics whose peak is located near the compression top dead center. The higher the rotation speed of the crankshaft is, the higher the resistance Ta generated by the reaction force of compression is. Therefore, when the rotation speed of the crankshaft 5 is higher, the curved shape of the resistance Ta has a greater height.

For example, if the resistance generated by the short-circuiting of the terminals of the stator windings W is not applied and the rotation speed of the crankshaft 5 is high at a location near the compression top dead center in the compression stroke after the combustion operation of the four-stroke engine body E is stopped; the resistance Ta generated by the reaction force of compression is high. The height of the curved shape of the resistance Ta, which is shown in Fig. 7B for example, is elevated as a whole. In this case, the crankshaft 5 is rebounded into reverse rotation by the reaction force of compression.

The engine unit EU of this embodiment is configured such that, after the combustion operation of the four-stroke engine body E is stopped, the resistance generated by the short-circuiting of the terminals of the stator windings W is applied to force the crankshaft 5 to stop forwardly rotating in the compression stroke. This configuration allows the rotation speed of the crankshaft to be lowered to a degree that does not stop the rotation of the crankshaft 5, thus reducing any rebound of the crankshaft 5 caused by the reaction force of compression as well as preventing the crankshaft 5 from overcoming the compression stroke. Accordingly, a variation in the position where the forward rotation of the crankshaft 5 stops can be lessened.

In addition, applying the resistance generated by the short-circuiting of the terminals of the stator windings W to the crankshaft 5 during the compression stroke allows a more effective use of the characteristics of the resistance generated by the short-circuiting of the terminals of the stator windings W and the characteristics of the resistance generated by the reaction force of compression.

The resistance Tb to rotation generated by the short-circuiting of the stator windings W gradually decreases as the crankshaft 5 decelerates in the compression stroke, while the resistance Ta generated by the reaction force of compression increases as the forward rotation of the crankshaft 5 progresses in the compression stroke. A balance between the decrease of the resistance Tb generated by the short-circuiting of the stator windings W and the increase of the resistance Ta generated by the reaction force of compression can be used to stabilize the position where the forward rotation of the crankshaft 5 stops. Accordingly, a variation in the position where the forward rotation of the crankshaft 5 stops can be lessened.

The control device CT determines whether the rotation of the crankshaft 5 has stopped based on the signal outputted from the rotor position detection device 50 (step S16). In this embodiment, the rotor position detection device 50 detects a variation in the electromotive force caused along with passing of the detection object parts 38. Therefore, once the rotation of the crankshaft 5 is slowed so that the variation in the electromotive force is reduced, the rotor position detection device 50 of this embodiment can no longer detect the rotation of the crankshaft 5. As long as at least the rotor position detection device 50 detects rotation of the crankshaft 5, the crankshaft 5 can be considered as rotating. The rotor position detection device 50 is not limited to the one illustrated in this embodiment, but it may be configured to, for example, detect rotation of the crankshaft 5 until the rotation of the crankshaft 5 stops.

If the rotation of the crankshaft 5 has stopped (step S16: YES), the control device CT waits for reception of a start instruction, i.e., a restart instruction (step S17).

In this embodiment, the control device CT continues short-circuiting the terminals of the stator windings W until next forward rotation of the crankshaft 5 is started. Since the control device CT continues short-circuiting the terminals of the stator windings W after the rotation of the crankshaft 5 stops, the stopped state of the crankshaft 5 is stabilized. For example, if an external force that drives the crankshaft 5 to rotate occurs, this rotation generates an induced electromotive voltage in the stator windings W. The induced electromotive voltage thus generated causes a resistance to be applied to the rotation. As a result, the stopped state of the crankshaft 5 is stabilized. Here, it is also acceptable that the control device CT stops short-circuiting the terminals of the stator windings W if the rotation of the crankshaft 5 has stopped (step S16: YES).

In response to reception of the start instruction under the state where the combustion operation of the four-stroke engine body E is stopped and the rotation of the crankshaft is stopped, the control device CT controls the plurality of switching parts 611 to 616, to direct the three-phase brushless motor SG to start forward rotation of the crankshaft 5 (step S18). The start of forward rotation of the crankshaft 5, which is conducted by the control device CT, begins at the position in the compression stroke where the crankshaft 5 has been stopped.

The start instruction is inputted from the starter switch 16 to the control device CT when, for example, the starter switch 16 is operated. In a case where the engine unit EU has an idling stop function, the control device CT itself executes the start instruction by determining whether or not a predefined engine start condition is satisfied. Achievement of the predefined engine start condition is included in the reception of the start instruction. The predefined engine start condition is, for example, activation of an acceleration operator (not shown).

If the start instruction is received (step S17: Yes), the control device CT directs the three-phase brushless motor SG to rotate the crankshaft 5, thus starting the four-stroke engine body E (step S18). To be exact, the driving control unit 621 of the starter motor controller 62 directs the three-phase brushless motor SG to rotate the crankshaft 5, thus starting the four-stroke engine body E.

Fig. 7A illustrates a situation where rotation of the crankshaft 5 is started from the position P2 in the compression stroke, which is the position where the crankshaft 5 has been stopped.

The engine unit EU of this embodiment lessens a variation in the position where the forward rotation of the crankshaft 5 stops after the combustion operation of the four-stroke engine body E is stopped. In other words, a variation in the position where forward rotation of the crankshaft 5 will start at a time of starting the four-stroke engine body E is lessened. The torque required of the crankshaft 5 to overcome the load peak is affected by the rotation speed which has been accelerated until the crankshaft 5 reaches the load peak. Therefore, the required torque is affected by the position where the crankshaft 5 starts forward rotation. In this embodiment, a variation in the position where the crankshaft 5 starts forward rotation is lessened, and thus a variation in a maximum torque required for driving the crankshaft 5 in forward rotation at a time of starting the four-stroke engine body E is lessened. As a result, a reduced output torque can be required of the three-phase brushless motor to start the four-stroke engine body.

Then, if the rotation speed of the crankshaft 5 is higher than a predetermined ignitable rotation speed (step S17: Yes), the control device CT starts the combustion operation of the four-stroke engine body E (step S19). In more detail, the combustion controller 63 of the control device CT controls the combustion operation of the four-stroke engine body E by controlling the spark plug 29. In a case where the four-stroke engine body E includes a fuel injector that injects a fuel for generation of a mixed gas, the combustion controller 63 also controls injection of the fuel injector to control the combustion operation of the four-stroke engine body E. The start of the combustion operation results in starting the four-stroke engine body E.

The engine unit EU of this embodiment lessens a variation in the position where the crankshaft 5 starts forward rotation at a time of starting the four-stroke engine body E. This leads to a less variation in the torque required of the three-phase brushless motor SG to start the four-stroke engine body. Accordingly, a reduced output torque of the three-phase brushless motor SG is permitted, and thus downsizing of the three-phase brushless motor SG is permitted.

After the four-stroke engine body E is started, the three-phase brushless motor SG is rotated along with rotation of the crankshaft 5, to function as a generator that generates a current for charging the battery 14. More specifically, upon start of the combustion of the four-stroke engine body E, the three-phase brushless motor SG driven by the four-stroke engine body E functions as a generator. The control device CT performs on/off-operation of the plurality of switching parts 611 to 616, to control the current supplied from the plurality of stator windings W to the battery 14. The control device CT performs the on/off-operation of the plurality of switching parts 611 to 616 based on an electrical signal in the detection-purpose winding 51 of the rotor position detection device 50.

In the example illustrated in this embodiment, after combustion of the four-stroke engine body E is stopped and rotation of the crankshaft 5 is stopped (step S16: Yes), the control device CT rotates the crankshaft 5 upon reception of a restart instruction (step S17: Yes). This, however, does not restrict the control device of the present invention. In a possible example, after rotation of the crankshaft 5 stops as a result of a resistance applied to the rotation of the crankshaft 5, the control device drives the crankshaft 5 in forward rotation for a predefined time period before a restart instruction is received.

### [Second Embodiment]

Next, a second embodiment of the present invention will be described. In the description of the second embodiment below, elements corresponding to the respective elements of the first embodiment are denoted by the same reference signs, and differences from the first embodiment described above will be mainly described.

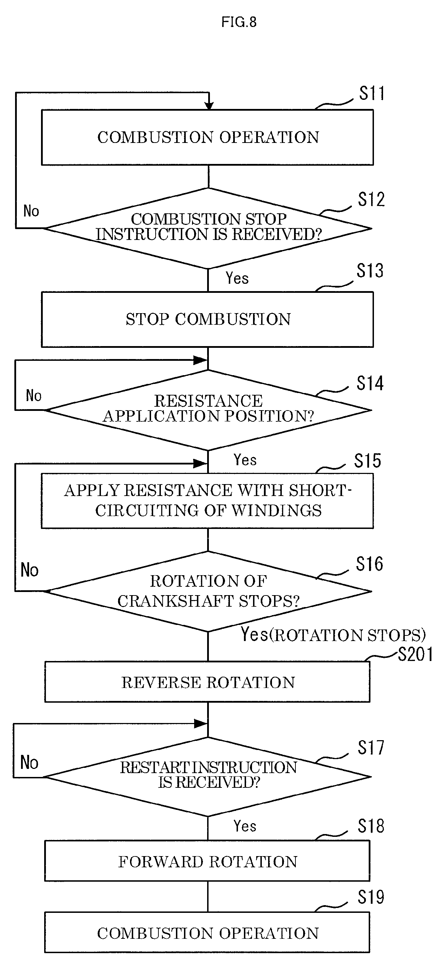

Fig. 8 is a flowchart illustrating an operation of the engine unit EU according to the second embodiment.

In the engine unit EU of this embodiment, after a resistance generated by short-circuiting of the terminals of the stator windings W is applied to forward rotation of the crankshaft 5 so that the forward rotation of the crankshaft 5 stops in the compression stroke, the control device CT drives the crankshaft 5 in reverse rotation (step S201). The control device CT drives the crankshaft 5 in reverse rotation and then in forward rotation (step S18). The control device CT controls the plurality of switching parts 611 to 616 so as to direct the three-phase brushless motor SG to drive the crankshaft 5 in reverse rotation.

More specifically, when no restart instruction is received under the state where the combustion operation of the four-stroke engine body E is stopped (step S13) and rotation of the crankshaft 5 is stopped (step S16: Yes); the control device CT drives the crankshaft 5 in reverse rotation (step S201). To be exact, the driving control unit 621 of the starter motor controller 62 drives the crankshaft 5 in reverse rotation (step S201). Upon reception of a restart instruction (step S17: Yes), the control device CT drives the crankshaft 5 in forward rotation (step S18).

The engine unit EU of this embodiment lessens a variation in the position where forward rotation of the crankshaft 5 stops after the combustion operation of the four-stroke engine body E is stopped (step S13). As a consequence, in a case of driving the crankshaft 5 in reverse rotation (step S201), the position where the reverse rotation of the crankshaft 5 stops less largely varies. That is, the position where the crankshaft 5 will start forward rotation in step S18 less largely varies.

Since a variation in the position where the crankshaft 5 will start forward rotation is lessened, a variation in the maximum torque required for driving the crankshaft 5 in forward rotation is lessened. As a result, a variation in the torque required of the three-phase brushless motor to start the four-stroke engine body is lessened.

In the example illustrated in this embodiment, the crankshaft 5 is driven in reverse rotation (step S201) when no restart instruction is received. This, however, does not restrict the control device of the present invention. For example, the control device of the present invention may drive the crankshaft in reverse rotation upon reception of a restart instruction.

### [Motorcycle]

Fig. 9 is a diagram showing an external appearance of a vehicle to which the engine unit according to either of the first and second embodiments is mounted.

A vehicle A shown in Fig. 9 includes an engine unit EU, a vehicle body 101, wheels 102, 103, and a battery 14. The engine unit EU may be the engine unit EU according to either of the first and second embodiments. The engine unit EU mounted to the vehicle A drives the wheel 103, which is a drive wheel, so that the wheel 103 is rotated to cause the vehicle A to travel.

The vehicle A shown in Fig. 9, which is equipped with the engine unit EU, is able to lessen a variation in the position where rotation of the crankshaft stops after combustion of the four-stroke engine body is stopped.

The vehicle A shown in Fig. 9 is a motorcycle. The vehicle of the present invention is not limited to motorcycles. Examples of the vehicle of the present invention include scooter type motorcycles, moped type motorcycles, off-road type motorcycles, and on-road type motorcycles. Straddled vehicles other than motorcycles are also acceptable. For example, ATVs (All-Terrain Vehicles) are acceptable. The vehicle of the present invention is not limited to straddled vehicles, and may be a four-wheeled vehicle including a passenger compartment, for example.

The above-described embodiments illustrate the case where the four-stroke engine body E is a single-cylinder engine. The engine of the present invention, however, is not particularly limited except for the requirement that the engine should have a high-load region and a low-load region. Thus, a multi-cylinder engine is also adoptable. Examples of the engine other than the engine illustrated in this embodiment include a straight single-cylinder engine, a parallel double-cylinder engine, a straight double-cylinder engine, a V-type double-cylinder engine, and a horizontal opposed double-cylinder engine. The number of cylinders included in the multi-cylinder engine is not particularly limited. The multi-cylinder engine may be, for example, a four-cylinder engine. Here, some of four-cylinder engines have no low-load region. For example, there is a four-cylinder engine configured such that compression strokes of cylinders occur at equal intervals (a four-cylinder engine configured such that explosion occurs at equal intervals). Such an engine having no low-load region does not conform to the definition of the engine of the present invention.

In the example illustrated in the above-described embodiments, the control device CT starts to apply a resistance to forward rotation of the crankshaft 5 while the crankshaft 5 is in a position past the compression top dead center and before the compression stroke with respect to the forward rotation direction. Alternatively, it is also acceptable that the control device of the present invention starts to apply a resistance to forward rotation of the crankshaft when the crankshaft is in a position before the compression top dead center with respect to the forward rotation direction. For example, the control device of the present invention may start to apply a resistance to forward rotation of the crankshaft prior to the last cycle before the forward rotation of the crankshaft stops. The last cycle is a cycle consisting of the expansion stroke, the exhaust stroke, the intake stroke, and the compression stroke, in which the compression stroke where the rotation of the crankshaft stops is included.

In the example illustrated in the above-described embodiments, the control device CT applies the resistance generated by short-circuiting of the terminals of the stator windings W to the crankshaft 5 during the compression stroke in which the crankshaft 5 is to be stopped. The control device of the present invention, however, does not always have to apply the resistance generated by short-circuiting of the terminals of the windings during the compression stroke in which the crankshaft is to be stopped.

In the example illustrated in the above-described embodiments, the control device CT short-circuits the terminals of the stator windings W for all of the three phases of the three-phase brushless motor SG. Alternatively, it is also acceptable that the control device of the present invention short-circuits the terminals for part of the three phases, to apply a resistance to rotation of the crankshaft. For example, the control device of the present invention may short-circuit the terminals of the stator windings corresponding to only one of the three phases. The control device of the present invention may short-circuit the terminals of the stator windings corresponding to two phases, for example.

In the example illustrated in the above-described embodiments, the control device CT applies a resistance to forward rotation of the crankshaft 5 by short-circuiting the terminals of the three-phase stator windings W. Here, it is acceptable that the control device of the present invention also applies a resistance not resulting from the short-circuiting of the terminals of the windings in combination with application of the resistance generated by the short-circuiting of the terminals of the windings. For example, the control device first controls a current flowing between the battery and the windings, to apply a resistance to forward rotation of the crankshaft. The control device controls the current flowing between the battery and the windings by, for example, performing a vector control on the switching parts. Then, the control device applies a resistance to the forward rotation of the crankshaft 5 by short-circuiting the terminals of the windings. That is, a period from when the combustion operation of the engine is stopped to when the crankshaft stops in the compression stroke includes not only a period during which the terminals of the plurality of windings are short-circuited to apply a resistance to the forward rotation of the crankshaft but also a period during which a resistance is applied to the forward rotation without short-circuiting of the terminals of the windings.

Furthermore, for example, the following configurations are adoptable in the engine unit of the present invention.
(A1) The period from when the combustion operation of the engine is stopped to when the crankshaft stops in the compression stroke includes not only at least one period during which a resistance is applied to forward rotation of the crankshaft with short-circuiting of the terminals of the plurality of windings but also at least one period during which a resistance is applied to the forward rotation without short-circuiting of the terminals of the windings.
(A2) The period from when the combustion operation of the engine is stopped to when the crankshaft stops in the compression stroke includes not only at least one period during which a resistance is applied to forward rotation of the crankshaft with short-circuiting of the terminals of the plurality of windings but also at least one period during which the three-phase brushless motor is not directed to apply any resistance to the forward rotation.
(A3) The period from when the combustion operation of the engine is stopped to when the crankshaft stops in the compression stroke includes not only at least one period during which a resistance is applied to forward rotation of the crankshaft with short-circuiting of the terminals of the plurality of windings but also at least one period during which a resistance is applied to the forward rotation without short-circuiting of the terminals of the windings as well as at least one period during which the three-phase brushless motor is not directed to apply any resistance to the forward rotation.
(A4) In the configurations of (A1) to (A3), the beginning point of the period from when the combustion operation of the engine is stopped to when the crankshaft stops in the compression stroke is within the period during which a resistance is applied to forward rotation of the crankshaft with short-circuiting of the terminals of the plurality of windings.
(A5) In the configurations of (A1) to (A3), the beginning point of the period from when the combustion operation of the engine is stopped to when the crankshaft stops in the compression stroke is within the period during which a resistance is applied to the forward rotation without short-circuiting of the terminals of the windings.
(A6) In the configurations of (A1) to (A3), the beginning point of the period from when the combustion operation of the engine is stopped to when the crankshaft stops in the compression stroke is within the period during which the three-phase brushless motor is not directed to apply any resistance to the forward rotation.
(A7) In the configurations of (A1) to (A3), the ending point of the period from when the combustion operation of the engine is stopped to when the crankshaft stops in the compression stroke is preferably within the period during which a resistance is applied to forward rotation of the crankshaft with short-circuiting of the terminals of the plurality of windings, or in the period during which the three-phase brushless motor is not directed to apply any resistance to the forward rotation. This makes it easy to ensure a balance between the resistance applied by the short-circuiting of the terminals of the windings and the resistance applied by the reaction force of compression at the time when the forward rotation of the crankshaft stops.
(A8) The period from when the combustion operation of the engine is stopped to when the crankshaft stops in the compression stroke includes not only at least one period during which a resistance is applied to forward rotation of the crankshaft with short-circuiting of the terminals of the plurality of windings but also at least one period during which a resistance is applied to the forward rotation without short-circuiting of the terminals of the windings.
(A9) In the configuration of (A8), a period of the last cycle within the period from when the combustion operation of the engine is stopped to when the crankshaft stops in the compression stroke is the period during which a resistance is applied to forward rotation of the crankshaft with short-circuiting of the terminals of the plurality of windings. Here, the last cycle is a cycle up to the compression stroke in which the crankshaft stops, and consists of the expansion stroke, the exhaust stroke, the intake stroke, and the compression stroke.
(A10) The period during which a resistance is applied to forward rotation of the crankshaft with short-circuiting of the terminals of the plurality of windings may include at least one of a period during which the terminals of the stator windings corresponding to only one phase are short-circuited and a period during which the terminals of the stator windings corresponding to two phases are short-circuited.
(A11) The period during which a resistance is applied to forward rotation of the crankshaft with short-circuiting of the terminals of the plurality of windings is preferably a period during which the terminals of the stator windings W corresponding to all of the three phases are short-circuited.
(A12) In the four-stroke engine body, it is preferable that at least part of the last cycle before the forward rotation of the crankshaft stops corresponds to the at least one period during which a resistance is applied to forward rotation of the crankshaft with short-circuiting of the terminals of the plurality of windings. This makes it easy to ensure a balance between the resistance applied by the short-circuiting of the terminals of the windings and the resistance applied by the reaction force of compression at the time when the forward rotation of the crankshaft stops.
(A13) Preferably, at least part of the compression stroke in which the forward rotation of the crankshaft stops corresponds to the at least one period during which a resistance is applied to forward rotation of the crankshaft with short-circuiting of the terminals of the plurality of windings. This makes it easy to ensure a balance between the resistance applied by the short-circuiting of the terminals of the windings and the resistance applied by the reaction force of compression at the time when the forward rotation of the crankshaft stops.

It should be understood that the terms and expressions used herein are for descriptions and have no intention to be construed in a limited manner, do not eliminate any equivalents of features shown and mentioned herein, and allow various modifications falling within the claimed scope of the present invention.

The present invention may be embodied in many different forms. The present disclosure is to be considered as providing examples of the principles of the invention. A number of illustrative embodiments are described herein with the understanding that such examples are not intended to limit the invention to preferred embodiments described herein and/or illustrated herein.

While some illustrative embodiments of the invention have been described herein, the present invention is not limited to the various preferred embodiments described herein. The present invention includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to".

### Reference Signs List

- A: vehicle
- CT: control device
- E: four-stroke engine body
- EU: engine unit
- SG: three-phase brushless motor
- 5: crankshaft
- 62: starter motor controller
- 63: combustion controller
- 61: inverter
- 611-616: switching part

## Claims

1. An engine unit mountable to a vehicle, the engine unit comprising:
a four-stroke engine body in which a high-load region and a low-load region occur during four strokes, the high-load region having a high load on rotation of a crankshaft, the low-load region having a lower load on rotation of the crankshaft than that of the high-load region;
a three-phase brushless motor including a plurality of windings corresponding to three phases, the three-phase brushless motor drivable by a battery provided in the vehicle, the three-phase brushless motor being configured to start the four-stroke engine body by driving the crankshaft in forward rotation in response to reception of a start instruction, the three-phase brushless motor being configured to function as a generator that generates a current for charging the battery by being rotated along with rotation of the crankshaft after the four-stroke engine body is started;
an inverter including a plurality of switching parts configured to control a current flowing between the battery and the three-phase brushless motor; and
a control device including a starter motor controller and a combustion controller, the starter motor controller being configured to control the plurality of switching parts included in the inverter to control the current flowing between the battery and the three-phase brushless motor, the combustion controller being configured to control a combustion operation of the four-stroke engine body,
the control device configured to, while the crankshaft is in forward rotation after the combustion operation of the four-stroke engine body is stopped, control the plurality of switching parts so as to short-circuit terminals of the plurality of windings such that a resistance is applied to the forward rotation of the crankshaft, forcing the crankshaft to stop forwardly rotating in a compression stroke of the four-stroke engine body.

2. The engine unit according to claim 1, wherein
the control device is configured to:
after the combustion operation of the four-stroke engine body is stopped and before the compression stroke is reached, control the plurality of switching parts so as to start the short-circuiting of the terminals of the plurality of windings such that a resistance is applied to the forward rotation of the crankshaft, forcing the crankshaft to stop forwardly rotating in the compression stroke of the four-stroke engine body.

3. The engine unit according to claim 1 or 2, wherein
the control device is configured to:
after the forward rotation of the crankshaft stops in the compression stroke as a result of the resistance applied to the forward rotation of the crankshaft by the short-circuiting of the terminals of the plurality of windings, control the plurality of switching parts so as to drive the crankshaft in forward rotation, to start the four-stroke engine body.

4. The engine unit according to claim 1 or 2, wherein
the control device is configured to:
after the forward rotation of the crankshaft stops in the compression stroke as a result of the resistance applied to the forward rotation of the crankshaft by the short-circuiting of the terminals of the plurality of windings, control the plurality of switching parts so as to drive the crankshaft in reverse rotation and then drive the crankshaft in forward rotation after the reverse rotation, to start the four-stroke engine body.

5. A vehicle comprising the engine unit according to any one of claims 1 to 4.
